# EUROPÄISCHE PATENTANMELDUNG

(11) **EP 1 431 123 A1**
(43) Veröffentlichungstag der Anmeldung: **23.06.2004**
(21) Anmeldenummer: 03027212.4
(22) Anmeldetag: 28.11.2003
(51) Int. Cl.: B60R 7/06, B60R 11/02

(54) **Ablagefach**

(30) Priorität: 19.12.2002 DE 10259414
(71) Anmelder: fischer automotive systems GmbH, 72160 Horb (DE); DaimlerChrysler AG, 70567 Stuttgart (DE)
(72) Erfinder: Bieck, Torsten, 72178 Waldachtal (DE); Leopold, Gunter, 72270 Baiersbronn (DE); Gebrehiwet, Tsehaye, 70599 Stuttgart (DE); Peters, Hans-Georg, 72199 Ammerbuch (DE); Schierling, Inge, 90469 Nürnberg (DE); Frederking, Uwe, 70771 Leinfelden (DE)

(57) **Zusammenfassung**

Die Erfindung betrifft ein Ablagefach (1) beispielsweise für den Einbau in ein Kraftfahrzeug als Handschuhfach. Das Ablagefach weist ein Innenfach (7) beispielsweise zur Aufnahme eines CD-Wechslers auf. Das Innenfach (7) hat eine Zugriffsseite (10) und kann zwischen einer geschlossenen Position, in der die Zugriffsseite (10) unzugänglich ist, und einer offenen, über die Öffnung des Ablagefachs (1) zugänglichen Position verschwenkt werden. Eine Hebelmechanik (11) und eine Kulissensteuerung (12) mit einer Steuerkurve (13) koppelt Deckel (3), Innenfach (7) und Gehäuse (9) derart, dass durch das Schließen des Ablagefachs (1) automatisch auch das Innenfach (7) geschlossen wird.

## Beschreibung

Die Erfindung betrifft ein Ablagefach mit den Merkmalen des Oberbegriffs des Anspruchs 1.

Ablagefächer mit einem schwenkend öffnenden Deckel sind weithin beispielsweise als Handschuhfächer in Kraftfahrzeugen bekannt. Dabei besteht das Problem, dass aufgrund der Platzverhältnisse häufig zwar ein erhebliches Volumen innerhalb des Fachs zur Verfügung steht, dieses aber schlecht genutzt werden kann, weil das Verschwenken des Deckels nur eine begrenzte Zugangsmöglichkeit zum Inneren des Fachs erlaubt. Der Platz unterhalb der Cockpitabdeckung im Beifahrerbereich bzw. innerhalb des Handschuhfachs könnte beispielsweise zur Integration eines CD-Wechslers für eine Audio-Anlage genutzt werden.

Der Erfindung liegt daher die Aufgabe zu Grunde, innerhalb eines Ablagefaches ein weiteres Fach anzuordnen, das getrennt öffenbar ist. Das Innenfach soll beim Öffnen des Ablagefachs zunächst geschlossen sein. Erst durch manuelles Betätigen soll eine Zugriffsseite des Innenfachs durch die Öffnung des Ablagefachs zugänglich werden. Das Innenfach soll automatisch schließen, wenn das Ablagefach geschlossen wird. Dieses automatische Schließen soll derart erfolgen, dass es nicht zu Beschädigungen am Deckel des Ablagefachs oder am Innenfach kommen kann.

Diese Aufgabe wird erfindungsgemäß durch die Merkmale des Anspruchs 1 gelöst. Die Erfindung sieht vor, dass in einem Ablagefach mit einem schwenkbaren Deckel ein Innenfach mit einer Zugriffsseite angeordnet ist. Das Innenfach ist selbst ebenfalls schwenkbar im Gehäuse des Ablagefachs gelagert und ist manuell öffen- und schließbar. Deckel, Innenfach und Gehäuse sind über eine Hebelmechanik und eine Kulissensteuerung derart gekoppelt, dass das geöffnete Innenfach beim Schließen des Ablagefachs ebenfalls schließt.

Das Innenfach kann beispielsweise als Aufnahme für einen CD-Wechsler innerhalb eines Handschuhfachs dienen. Die Bedienelemente des CD-Wechslers sind an der Zugriffsseite des Innenfachs angeordnet. Das Innenfach kann in der geschlossenen Position beispielsweise durch eine Raste gehalten werden. Durch manuelle Betätigung kann die Raste entriegelt werden und das Innenfach verschwenkt aufgrund von Schwerkraft und/oder Federwirkung. Die Schwenkbewegung kann außerdem gedämpft sein. In der nach unten geschwenkten Position werden die Bedienelemente des CD-Wechslers im Bereich der Öffnung des Handschuhfachs zugänglich. Der CD-Wechsler kann dann durch manuelles Anheben des Innenfachs zurück geschwenkt werden und dabei wieder in der Raste verriegeln. Alternativ kann das Handschuhfach selbst geschlossen werden, wodurch über die Hebelmechanik und die Kulissensteuerung das Innenfach ebenfalls automatisch verschwenkt und in der geschlossenen Position eingerastet wird. Durch die Verwendung einer Hebelmechanik verbunden mit einer Kulissensteuerung kann gewährleistet werden, dass es beim automatischen Schließen des Innenfachs nicht zu Kollisionen des Innenfachs mit dem Deckel oder dem Inhalt des Ablagefachs kommt. So kann die Steuerkurve der Kulissensteuerung derart gestaltet werden, dass das Innenfach bereits bei einem leichten Verschwenken des Deckels stark verschwenkt wird, während in fast geschlossener Position ein großer Schwenkwinkel des Deckels nur einen geringen oder gar keinen Schwenkwinkel des Innenfachs bewirkt. Dies ist insbesondere dann wichtig, wenn beispielsweise bei einem CD-Wechsler empfindliche Bauteile an der Zugriffsseite des Innenfachs angeordnet sind.

In einer bevorzugten Ausführung weist das Aufnahmefach eine Hebelmechanik mit einen Hebel auf, der im Gehäuse des Aufnahmefachs schwenkbar gelagert ist. Am hinteren Ende des Hebels ist ein Zapfen angeordnet, der in die am Innenfach angeordnete Steuerkurve der Kulissensteuerung eingreift. Am vorderen Ende des Hebels ist eine Steuerfläche angeordnet, auf die beim Schließen des Deckels eine Kraft übertragbar ist. Die Kraftübertragung kann entweder direkt durch einen am Deckel angeordneten Steuernocken oder über einen im Gehäuse geführten Steuerschieber erfolgen. Beim Verschwenken des Hebels wird der Zapfen in der Steuerkurve geführt und zwingt dadurch das Innenfach zu einer Schwenkbewegung.

Alternativ hierzu kann der Hebel im Innenfach schwenkbar gelagert werden. An seinem hinteren Ende ist wiederum ein Zapfen angeordnet, der in diesem Fall jedoch in die im Gehäuse angeordnete Steuerkurve eingreift. Am vorderen Ende ist wiederum eine Steuerfläche angeordnet, auf die beim Schließen des Deckels eine Kraft übertragbar ist. Zur Kraftübertragung kann ebenfalls ein Steuernocken am Deckel oder ein im Gehäuse geführter Steuerschieber dienen. Eine derartige Anordnung bewirkt, dass der Hebel als Ganzer gegenüber dem Gehäuse bewegt wird, da er im Innenfach gelagert ist. Beim Verschwenken des Hebels wird der Zapfen wiederum in der Steuerkurve geführt, wodurch das Schwenklager des Hebels abgesenkt bzw. angehoben wird.

Um das Innenfach in geschlossener Position zu halten, sind unterschiedliche Vorrichtungen möglich. So wird in einer bevorzugten Ausführung das Innenfach von einer Raste gehalten. Diese Raste kann manuell gelöst werden, wodurch das Innenfach in die geöffnete Position verschwenkt. Um das Innenfach beim Zurückschwenken wieder zu halten, kann beispielsweise vorgesehen werden, dass die Schwenkbewegung des Innenfachs einen leichten Überhub beschreibt und hierdurch in die Raste einrastet.

Zur Realisierung des Überhubs kann der Steuerhebel an seinem hinteren Ende ein verschiebbar gelagerten Steuerkopf mit dem Zapfen aufweisen. Auf den Steuerkopf wirkt eine Feder, die den Steuerkopf entgegen der schließenden Schwenkbewegung des Hebels drückt. Die Steuerkurve weist für den Schwenkwinkel, bei dem der Überhub gewünscht wird, einen Knick auf. Der Überhub führt zum Einrasten in die Raste. Wird die Steuerkurve beim Schwenken in die geöffnete Stellung des Innenfachs durchfahren, so wird der Zapfen aufgrund der Verschiebbarkeit des Steuerkopfes am Knick der Steuerkurve zunächst angehalten. Hierdurch besteht kein Zwang zum Durchfahren eines Überhubs und das Innenfach kann direkt abgesenkt werden.

Alternativ hierzu kann das Halten des Innenfachs in der geschlossenen Position allein durch die Steuerkurve realisiert werden. Dazu wird die Steuerkurve der Kulissensteuerung bogenförmig derart ausgeformt, dass beim Schwenken des Innenfachs in die geschlossene Position ein Überhub bewirkt wird und nach dem Durchfahren ein Gesperre gebildet wird. In diesem Fall wird das Innenfach durch Betätigung des Steuerhebels in die geöffnete Position verschwenkt. Die Betätigung des Steuerhebels kann direkt oder indirekt über eine Taste oder dgl. erfolgen.

Die Erfindung wird nachfolgend anhand zweier in der Zeichnung dargestellter Ausführungsbeispiele näher erläutert. Es zeigen:
- Figur 1: das Ablagefach mit geöffnetem Deckel und geschlossenem Innenfach,
- Figur 2: das gleiche Ablagefach mit geöffnetem Deckel und geöffneten Innenfach,
- Figur 3: ein weiteres Ablagefach mit geöffnetem Deckel und geschlossenem Innenfach sowie
- Figur 4: das gleiche Ablagefach mit geöffnetem Deckel und geöffneten Innenfach.

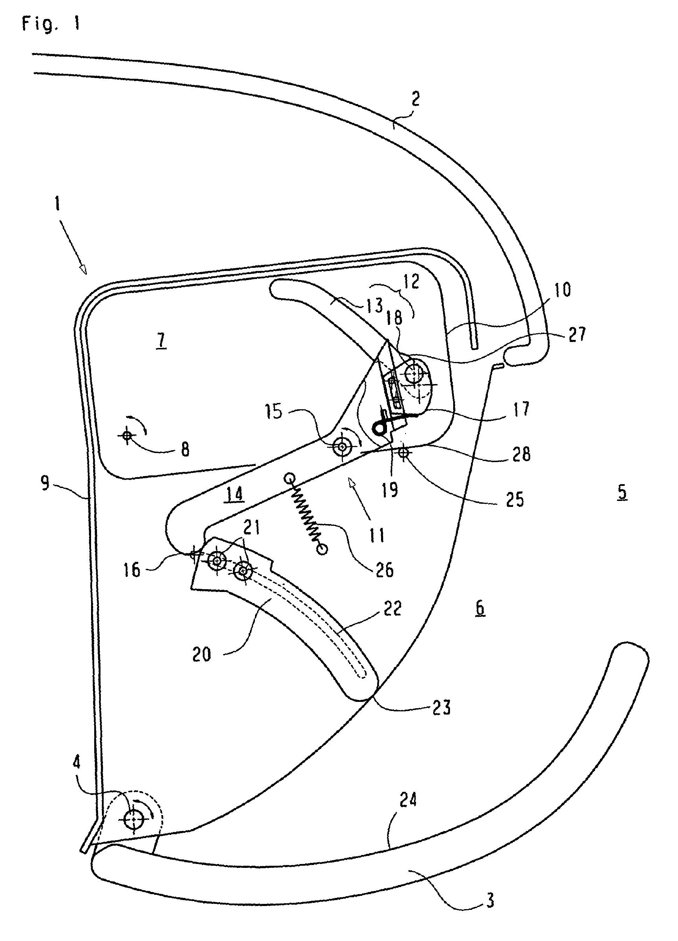

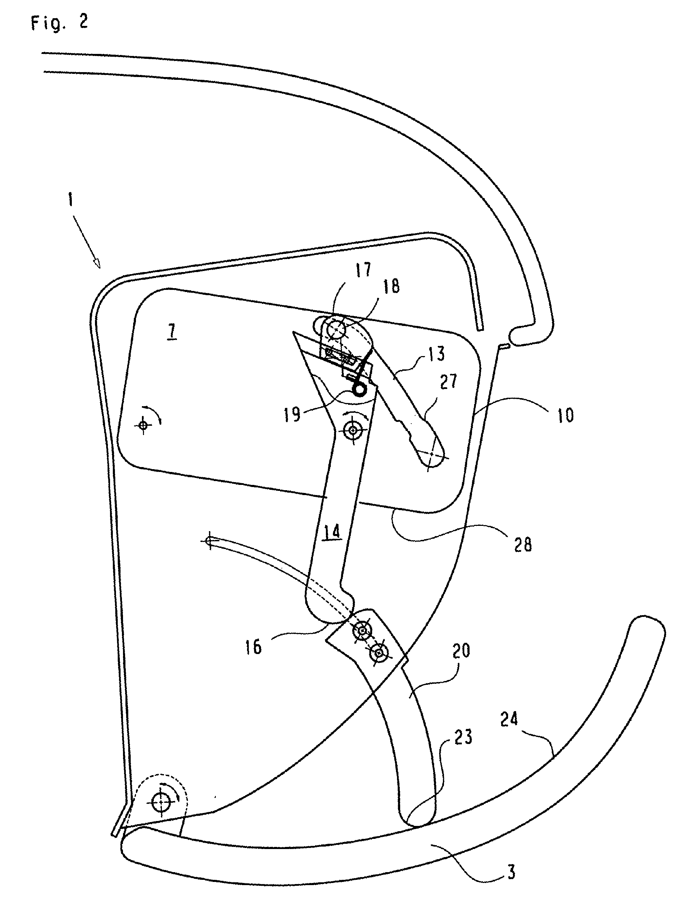

Das in Figur 1 dargestellte Ablagefach 1 ist als Handschuhfach in das Cockpit 2 eines Kraftfahrzeuges eingebaut. Der Deckel 3 des Ablagefachs 1 ist um seinen Gelenkpunkt 4 schwenkbar und kann in seiner geschlossenen Position verrastet werden. Durch die Öffnung 5 ist der Innenraum 6 des Ablagefachs 1 zugänglich. Er kann der Ablage von Karten, Unterlagen, Handschuhen oder dgl. dienen. Im oberen Bereich des Ablagefachs 1 ist das Innenfach 7 angeordnet. Es ist ebenfalls mit einem Schwenklager 8 im Gehäuse 9 befestigt und kann derart in den Innenraum 6 des Ablagefachs 1 verschwenkt werden, dass seine Zugriffsseite 10 durch die Öffnung 5 des Ablagefachs 1 zugänglich wird (siehe Figur 2). Das Innenfach 7 kann beispielsweise als Aufnahme für einen CD-Wechsler bzw. andere elektronische Geräte oder auch als weiteres Staufach ausgebildet sein.

Deckel 3, Innenfach 7 und Gehäuse 9 sind über eine Hebelmechanik 11 und eine Kulissensteuerung 12 mit einer Steuerkurve 13 gekoppelt. Die Hebelmechanik 11 besteht aus einem Hebel 14, der mit dem Hebelgelenk 15 am Gehäuse 9 drehbar gelagert ist. An seinem vorderen Ende weist der Hebel 14 eine Steuerfläche 16 auf. An seinem hinteren Ende ist ein verschiebbar gelagerter Steuerkopf 17 mit einem in die Steuerkurve 13 eingreifenden Zapfen 18 angeordnet. Durch die Torsionsfeder 19 wird der Steuerkopf 17 nach oben gedrückt. An der Steuerfläche 16 des Hebels 14 liegt ein Steuerschieber 20 an. Dieser ist durch die beiden Führungszapfen 21 verschieblich auf einer Führungsbahn 22 geführt und wird durch Reibkräfte in der dargestellten Position gehalten. Alternativ ist es möglich, ein Rasteinrichtung, beispielsweise in Form einer Kugelraste, für das Halten des Steuerschiebers 20 zu verwenden. Die Anschlagfläche 23 des Steuerschiebers 20 ist bei geschlossenem Deckel 3 in Kontakt mit der Innenseite 24 des Deckels 3.

Durch Verschieben der stiftförmigen Raste 25 senkrecht zur Darstellungsebene kann das Öffnen des Innenfachs 7 ausgelöst werden. Aufgrund von Schwerkraft und/oder Federkraft wirkt ein Moment auf das Innenfach 7, das zu dessen Absenken führt. In dem dargestellten Ausführungsbeispiel unterstützt die Feder 26 das Absenken. Gleichzeitig kann der Vorgang durch eine Dämpfung (nicht dargestellt) gebremst werden. Durch das Verschwenken des Innenfachs 7 wird der Zapfen 18 entlang der Steuerkurve 13 geführt und der Hebel 14 ebenfalls verschwenkt. An dem Knick 27 der Steuerkurve 13 wird der Zapfen 18 verzögert und der Steuerkopf entgegen der Federkraft der Torsionsfeder 19 verschoben. Hierdurch kommt es beim weiteren Verschwenken des Hebels 14 nicht zu einem Anheben oder einer Blockade der Schwenkbewegung des Innenfachs 7. Durch das Schwenken des Hebels 14 wird gleichzeitig über die Steuerfläche 16 der Steuerschieber 20 entlang der Führungsbahn 22 verschoben.

Durch das weitere Absenken des Innenfachs 7 wird schließlich die in Figur 2 dargestellte Position erreicht. In dieser Stellung des Innenfachs 7 ist dessen Zugriffsseite 10 für den Bediener zugänglich. Bei einem CD-Wechsler kann dies beispielsweise zum Wechsel der CDs oder zur Veränderung der Geräteeinstellungen genutzt werden. Ist die Bedienung abgeschlossen, kann das Innenfach durch ein Anheben an der Unterseite 28 des Innenfachs 7 geschlossen werden. Hierdurch wird die Steuerkurve in umgekehrter Richtung vom Zapfen 18 durchfahren. An dem Knick 27 ermöglicht die Verschiebbarkeit des Steuerkopfes 17, dass das Innenfach 7 über die Raste 25 (siehe Figur 1) angehoben wird, so dass diese beispielsweise federnd unter die Unterseite 28 greifen kann.

Sofern bei geöffnetem Innenfach 7 der Deckel 3 geschlossen wird, bewirkt die Anlage der Anschlagfläche 23 des Steuerschiebers 20 an der Innenseite 24 des Deckels 3, dass der Steuerschieber 20 verschoben wird. Durch die Anlage der Steuerfläche 16 des Hebels 14 an dem Steuerschieber 20 wird der Hebel 14 verschwenkt. Die Führung des Zapfens 18 in der Steuerkurve 13 bewirkt, dass das Innenfach 7 angehoben wird. Durch die Form der Steuerkurve 13 kann dabei bestimmt werden, ob das Innenfach 7 gleichmäßig, oder beispielsweise zunächst stark und im weitern langsam angehoben wird. Durch den Knick 27 der Steuerkurve 13 sowie der Torsionsfeder 19 am verschieblichen Steuerkopf 17 kommt es zu einem Überhub über die in Figur 1 gezeigte Position. Damit kann wiederum ein Greifen der Raste 25 (siehe Figur 1) unter die Unterseite 28 realisiert werden.

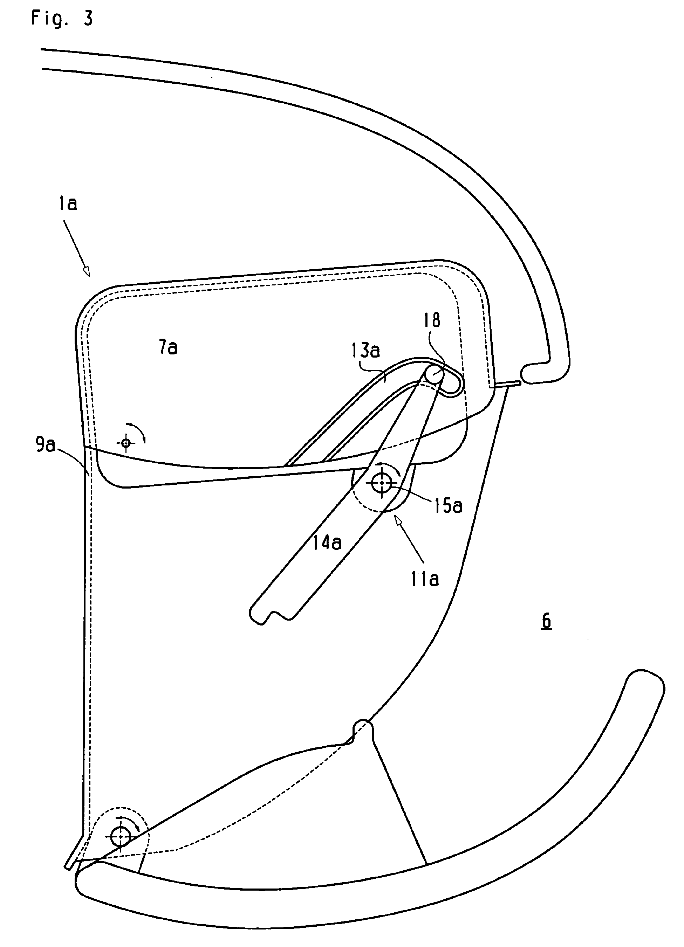

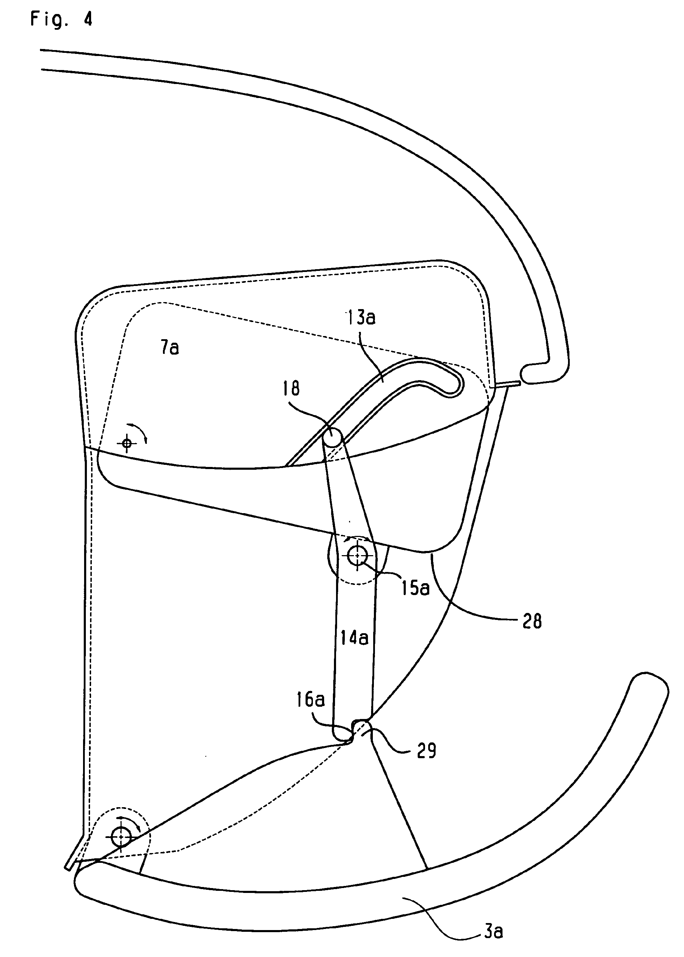

Figur 3 und 4 zeigen eine alternative Ausführungsform des Ablagefachs 1a. Dabei soll im Folgenden nur auf die sich unterscheidenden Elemente eingegangen werden. Die Hebelmechanik 11a wird durch einen Hebel 14a gebildet, der durch das Hebelgelenk 15a nicht am Gehäuse 9a sondern am Innenfach 7a drehbar gelagert ist. Entsprechend ist die Steuerkurve 13a am Gehäuse 9a angeordnet. Die Form der Steuerkurve 13a sorgt dafür, dass die Hebelmechanik 11a ein Gesperre bildet, dass ein Absenken des Innenfachs 7a verhindert.

Zum Absenken des Innenfachs 7a kann der Hebel 14a, sofern er im Innenraum 6 des Ablagefachs 1a zugänglich ist, von Hand verschwenkt werden. Stattdessen ist es aber auch möglich, den Hebel 14a über eine Taste und einen Schieber (nicht dargestellt) oder dgl. von außen zu betätigen. Die Führung des Zapfens 18 in der Steuerkurve 13a bewirkt zunächst einen leichten Überhub über die dargestellte Position und im Weiteren das Erreichen der in Figur 4 dargestellten geöffneten Position des Innenfachs 7a. In dieser Stellung kommt die Steuerfläche 16a des Hebels 14a in Kontakt mit dem Steuernocken 29 am Deckel 3a, wodurch die Schwenkbewegung des Innenfachs 7a gestoppt wird. Das Schließen des Innenfachs 7a kann wiederum direkt über ein Anheben des Innenfachs 7a an seiner Unterseite 28 erfolgen, oder indirekt über das Schließen des Deckels 3a. Im zweiten Fall wird über den Steuernocken 29 am Deckel 3a eine Kraft auf den Hebel 14a übertragen. Aufgrund des resultierenden Moments auf den Hebel 14a und der Führung des Zapfens 18 in der Steuerkurve 13a kommt es im Hebelgelenk 15a zu einer das Innenfach 7 nach oben schwenkenden Kraft. Die Schwenkbewegung wird wiederum durch einen Überhub abgeschlossen und schließlich die in Figur 3 gezeigte Position erreicht.

## Patentansprüche

1. Ablagefach, das mit einem schwenkbar gelagerten Deckel (3, 3a) öffen- und schließbar ist, **dadurch gekennzeichnet, dass** im Ablagefach (1, 1a) ein Innenfach (7, 7a) mit einer Zugriffsseite (10) angeordnet ist, wobei das Innenfach (7, 7a) zwischen einer geschlossenen Position, in der die Zugriffsseite (10) unzugänglich ist, und einer offenen, über die Öffnung (5) des Ablagefachs (1, 1a) zugänglichen Position schwenkbar im Gehäuse des Ablagefachs (1, 1a) gelagert ist, und wobei der Deckel (3, 3a), das Innenfach (7, 7a) und das Gehäuse (9, 9a) über eine Hebelmechanik (11, 11a) und eine Kulissensteuerung (12) mit einer Steuerkurve (13) derart gekoppelt sind, dass das Innenfach (7, 7a) beim Schließen des Ablagefachs (1, 1a) ebenfalls von der offenen in die geschlossene Position verschwenkt wird.

2. Ablagefach nach Anspruch 1, **dadurch gekennzeichnet, dass** die Hebelmechanik (11, 11a) einen Hebel (14, 14a) aufweist, der im Gehäuse (9, 9a) schwenkbar gelagert ist und an dessen hinterem Ende ein Zapfen (18) angeordnet ist, der in die am Innenfach (7, 7a) angeordnete Steuerkurve (13) eingreift, und an dessen vorderen Ende eine Steuerfläche (16) angeordnet ist, auf die beim Schließen des Deckels (3, 3a) eine Kraft übertragbar ist.

3. Ablagefach nach Anspruch 2, **dadurch gekennzeichnet, dass** der Hebel (14, 14a) am Innenfach (7, 7a) schwenkbar gelagert ist und dass der Zapfen (18) in die im Gehäuse (9, 9a) angeordnete Steuerkurve (13) eingreift.

4. Ablagefach nach Anspruch 1, **dadurch gekennzeichnet, dass** die Kraftübertragung beim Schließen des Deckels (3, 3a) über einen im Gehäuse (9, 9a) gelagerten Steuerschieber (20) auf die Hebelmechanik (11, 11a) erfolgt.

5. Ablagefach nach Anspruch 1, **dadurch gekennzeichnet, dass** die Kraftübertragung beim Schließen des Deckels (3, 3a) über einen Steuernocken am Deckel (3, 3a) auf die Hebelmechanik (11, 11a) erfolgt.

6. Ablagefach nach Anspruch 1, **dadurch gekennzeichnet, dass** das Innenfach (7, 7a) in der geschlossenen Position durch eine manuell entriegelbare Raste (25) gehalten wird.

7. Ablagefach nach Anspruch 1, **dadurch gekennzeichnet, dass** der Hebel (14, 14a) an seinem hinteren Ende ein verschiebbar gelagerten Steuerkopf (17) mit dem Zapfen (18) aufweist, und wobei Hebel (14, 14a) und Steuerkopf (17) über eine Torsionsfeder (19) verbunden sind, die den Steuerkopf entgegen der schließenden Schwenkbewegung des Hebels (14, 14a) drückt, und wobei die Steuerkurve (13) der Kulissensteuerung (12) derart ausgeformt ist, dass beim Schwenken des Innenfachs (7, 7a) in die geschlossene Position ein Überhub bewirkt wird, der ein Einrasten des Innenfachs (7, 7a) in die Raste (25) bewirkt.
